# EUROPEAN PATENT APPLICATION

(11) **EP 2 497 752 A1**
(43) Date of publication of application: **12.09.2012**
(21) Application number: 11001912.2
(22) Date of filing: 08.03.2011
(51) Int. Cl.: C02F 1/68, B01F 3/02, B01F 3/04, B01F 5/04

(54) **Method and apparatus for dissolving co2 in water**

(71) Applicant: Linde AG, 80331 München (DE)
(72) Inventor: Schneeberger, Heribert, 93309 Kehlheim (DE); Ogston, Mervyn, Morningside, Brisbane 4170 (AU); Dullstein, Stefan, 85375 Neufahrn (DE); Lloyd-Smith, Ralph, Annerley, Queensland 4103 (AU)
(74) Representative: Gellner, Bernd

(57) **Abstract**

The invention relates to a method and an apparatus for dissolving a gas in a fluid stream wherein said gas is supplied as a liquid gas, said liquid gas is vaporized and said vaporized gas is introduced and dissolved in said fluid stream, wherein said liquid gas is vaporized by heat exchange with said fluid stream. (Figure 1)

## Description

The invention relates to a method for dissolving a gas in a fluid stream wherein said gas is supplied as a liquid gas, said liquid gas is vaporized and said vaporized gas is introduced and dissolved in said fluid stream. The invention also relates to an apparatus for dissolving a gas in a fluid stream comprising a main conduit and a subsidiary conduit having an inlet and an outlet wherein said inlet and said outlet are in communication with said main conduit, further comprising gas introducing means for introducing gas into said subsidiary conduit, a liquid gas supply and a gas supply conduit connecting said liquid gas supply with said gas introducing means.

Desalination plants are more and more used to remove salt and other minerals from sea water in order to produce drinking water. The desalination is often carried out by reverse osmosis. The sea water is passed to a membrane system which retains salt and other minerals whereas the water permeates through the membranes. Thereby, the sea water is separated into a desalted water stream and into a concentrated solution containing the retained salts and minerals.

Drinking water desalinated by reverse osmosis has a low alkalinity and is without further treatment very aggressive. Therefore, in order to prevent corrosion of pipelines the water must be re-mineralized. It is already known to add calcium ions, for example by the addition of lime, and carbon dioxide to the water. The carbon dioxide decreases the pH value and allows the calcium ions to increase the hardness and alkalinity of the water.

It is an object of the invention to provide an improved method for re-mineralization of water.

It is further an object to improve the dissolution of a gas, in particular of carbon dioxide, introduced into a fluid stream.

It is further an object to provide an apparatus for dissolving a gas, in particular carbon dioxide, in a fluid stream.

This object is achieved by a method for dissolving a gas in a fluid stream wherein said gas is supplied as a liquid gas, said liquid gas is vaporized and said vaporized gas is introduced and dissolved in said fluid stream, wherein said liquid gas is vaporized by heat exchange with said fluid stream.

The inventive apparatus for dissolving a gas in a fluid stream comprising a main conduit and a subsidiary conduit having an inlet and an outlet wherein said inlet and said outlet are in communication with said main conduit, further comprising gas introducing means for introducing gas into said subsidiary conduit, a liquid gas supply and a gas supply conduit connecting said liquid gas supply with said gas introducing means, is characterized in that the gas supply conduit and the subsidiary conduit are in fluid communication with a heat exchanger.

According to the invention the gas to be dissolved in the fluid stream is supplied as a liquid. In a first step, said liquid gas is vaporized into the gaseous state. The vaporized gas is then introduced into and dissolved in the fluid stream. The vaporization of the liquid gas is achieved by means of heat exchange with the fluid stream into which the gas has been, is and/or will be introduced. The later means that the heat exchange can be carried out upstream, downstream and/or at the same location where the gas is introduced into the water.

The terms "upstream" and "downstream" always relate to the flow path or flow direction of the fluid into which the gas shall be introduced.

The invention is preferably directed to the introduction of a gas into a liquid stream, in particular into water. However, it is also possible to use the invention to introduce a gas into another gas stream.

According to a preferred embodiment the vaporized gas is introduced into said fluid stream by means of gas introducing means wherein said liquid gas is vaporized by heat exchange with said fluid stream downstream said gas introducing means. The liquid gas is brought into heat exchanging contact with a portion of the fluid. The heat exchange between the liquid gas and the fluid will cause the desired vaporization of the liquid gas. The vaporized gas is then introduced into a portion of the fluid which has not yet been subjected to the heat exchange. Thus, that portion of the fluid together with the gas which has been introduced into that portion of the fluid will then enter a heat exchanger which allows to exchange heat between the fluid and the liquid gas. Within the heat exchanger a laminar flow of the fluid is preferably broken and some turbulence caused. That turbulence will increase the heat exchange between the fluid and the gas and also improve the dissolution of the gas which has been introduced into the fluid.

According to another preferred embodiment the vaporized gas is introduced into said fluid stream by means of gas introducing means and the liquid gas is vaporized by heat exchange with said fluid stream upstream said gas introducing means. The liquid gas is brought into heat exchanging contact with a portion of the fluid. The heat exchange between the liquid gas and the fluid will cause vaporization of the liquid gas and on the other hand a certain decrease in temperature of the fluid. The vaporized gas is then introduced into that portion of the fluid which has been subjected to the heat exchange. Since the fluid has been cooled down by the heat exchange the solubility of the gas in the fluid is enhanced and the dissolution efficiency is increased.

It is also possible to vaporize the liquid gas in heat exchange with a part of the fluid stream upstream the gas introducing means as well as in heat exchange with a part of the fluid stream downstream the gas introducing means. In that case both effects described above are achieved, namely the cooling down of the fluid and the corresponding increase in solubility as well as the increased dissolution caused by turbulence in the heat exchanger.

The term heat exchanger shall mean any means for exchanging heat between the fluid and the liquid gas. It can be a separate heat exchanger module with one or more passages for the gas and one or more passages for the fluid which are in heat exchanging contact. The term heat exchanger shall also include any arrangement of the conduit for the fluid stream and the liquid gas supply conduit which allows to exchange heat between the fluid passed through the subsidiary conduit and the fluid passed through the liquid gas supply conduit.

According to another preferred embodiment a side stream is branched off said fluid stream, said vaporized gas is introduced into said side stream and said side stream is then re-introduced into said fluid stream. According to this embodiment a portion of the fluid stream is branched off as a side stream or subsidiary fluid and the gas is introduced into that side stream which has been branched off. The gas is dissolved in the side stream and subsequently the side stream is re-combined with the main fluid stream. By separating a side stream form the main fluid stream and introducing the gas into the side stream the mixing of the gas with the fluid and the dissolution of the gas in the fluid is improved. The heat exchange between the fluid and the gas may be achieved in the side stream and/or in the main stream. That means the liquid gas can be brought into heat transfer with the fluid stream flowing through the main conduit and/or with the portion of the fluid stream which has been branched off as side stream. Furthermore, the heat transfer from the fluid stream to the gas which shall be vaporized can be achieved before a side stream has been branched off, after the side stream has been branched off but before the side stream has been re-combined with the main fluid stream or after the side stream has been re-combined with the main fluid stream.

According to another preferred embodiment a side stream is branched off said fluid stream, said liquid gas is vaporized by heat exchange with said side stream and said side stream is then re-introduced into said fluid stream. In that case the liquid gas is vaporized by means of heat exchange with the side stream rather than with the main fluid stream. The vaporized gas can be introduced into the main fluid stream and/or into the side stream. Furthermore, the vaporized gas can be introduced into the fluid stream before the side stream has been branched off, after the side stream has been branched off but before the side stream has been re-combined with the main fluid stream or after the side stream has been re-combined with the main fluid stream.

The invention is preferably suited for introducing and dissolving carbon dioxide in water. But it is also possible to use the invention for disoolving any other gas, for example oxygen, in water or another liquid. The inventive method and apparatus could also be used for mixing a gas in another gas.

The inventive apparatus for dissolving a gas in a fluid stream comprising a main conduit and a subsidiary conduit having an inlet and an outlet wherein said inlet and said outlet are in communication with said main conduit, further comprising gas introducing means for introducing gas into said subsidiary conduit, a liquid gas supply and a gas supply conduit connecting said liquid gas supply with said gas introducing means is characterized in that the gas supply conduit and the subsidiary conduit are in fluid communication with a heat exchanger.

According to a preferred embodiment of the invention the heat exchanger is formed by a portion of the gas supply conduit and a portion of the subsidiary conduit. Preferably portions of these conduits are arranged pipe-in-pipe, that is one of the conduits runs within the other conduit, more preferred the gas supply conduit runs within the subsidiary conduit. It is further advantageous to arrange the gas supply and the subsidiary conduit coaxially.

The heat exchanger may be provided upstream or downstream of the gas introducing means.

A preferred embodiment of the inventive apparatus comprises a static mixer located downstream the gas introducing means. The dissolution of the gas in the fluid stream is substantially improved by the static mixer. The static mixer can be realised by baffles provided at the inner surface of the subsidiary conduit. If a pipe-in-pipe arrangement of gas supply conduit and subsidiary conduit with the gas supply conduit being the inner pipe has been chosen it is advantageous to provide baffles at the outer surface of the gas supply conduit. These baffles serve on the hand to improve the heat transfer between fluid and gas and on the other hand the baffles improve the dissolution of the gas in the fluid.

The method and apparatus according to the invention will now be described with reference to the accompanying drawings in which
- Figure 1: is a schematic drawing of a first apparatus according to the invention,
- figure 2: is a schematic drawing of a second apparatus according to the invention,
- figure 3: is third embodiment of the invention and
- figure 4: is fourth embodiment of the invention.

Like parts in the different drawings are referred to by the same reference numbers.

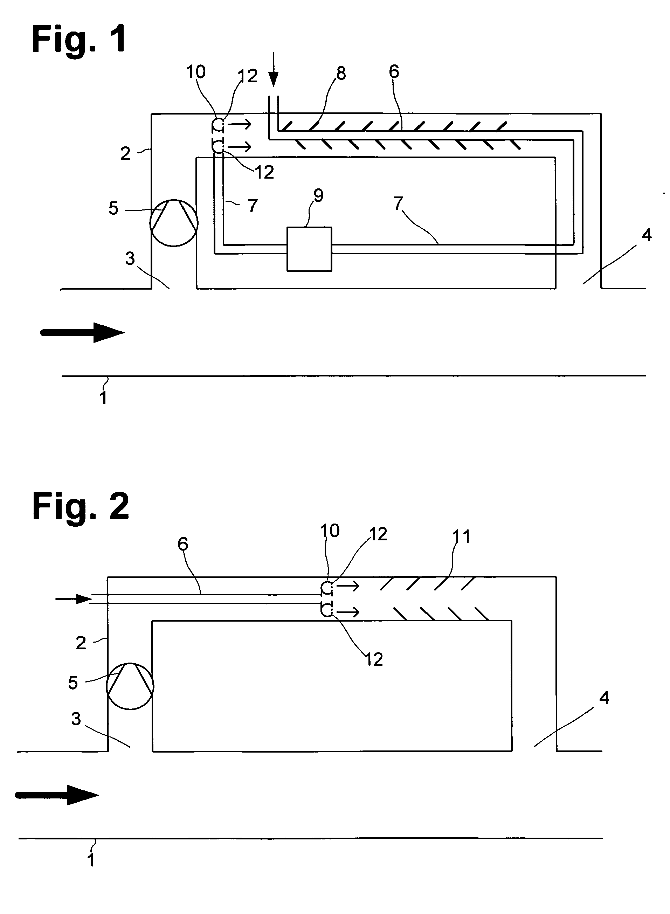

The apparatus shown in figure 1 will be explained by way of dissolving carbon dioxide in a water stream because it is particularly suited for that purpose. However, it may also be used for dissolving any other gas in another fluid or liquid. The apparatus comprises a main conduit 1 for the water which shall be enriched with carbon dioxide. A subsidiary conduit 2 branches off from the main conduit 1 at a location 3. The subsidiary conduit 2 is re-combined with the main conduit 1 at a location 4 which is preferably but not necessarily downstream of location 3.

Part of the water is withdrawn from the main conduit 1 and passed into the subsidiary conduit 2. The withdrawal of water is preferably achieved by means of a pump 5 located in the upstream portion of the subsidiary conduit 2.

Liquid carbon dioxide is withdrawn from a liquid carbon dioxide supply (not shown), for example a liquid carbon dioxide tank, and passed through a gas supply conduit 6, 7. A portion 6 of the gas supply conduit runs within the subsidiary conduit 2. Thus, that portion 6 of the gas supply conduit and the subsidiary conduit 2 form a pipe-in-pipe arrangement. Preferably, the gas supply conduit 6 and subsidiary conduit 2 are coaxially arranged. The carbon dioxide is passed through the inner pipe 6 whereas the water flowing in the subsidiary conduit 2 is passed through the annular space between the outer wall of gas supply conduit 6 and the inner wall of the subsidiary conduit 2. At the outer surface of the gas supply conduit 6 there are provided several baffles 8.

The gas supply conduit 6, 7 is connected to gas introducing means 10. The gas introducing means 10 is preferably designed as a ring diffuser, that is as a ring-shaped or annular conduit with several orifices or nozzles 12. The outer diameter of the annular conduit 10 is preferably about 2 to 20 mm less than the inner diameter of the subsidiary conduit 2 in order to produce micro bubbles that dissolve completely within a short reaction length downstream the injection point. The outer shape of the ring diffuser is preferably provided with a tearing edge. Downstream the tearing edge high turbulence is induced. The resulting shear forces also support the generation of micro bubbles.

The nozzles or orifices 12 are oriented at an inclination angle between 15 and 30° from the perpendicular to the water flow direction. The orifices 12 are preferably provided at the downstream end of the ring-shaped conduit 10. The orifices 12 are preferably designed and/or the diameter of the nozzles 12 is preferably chosen to induce a gas velocity of 5 to 15 m/s which improves the generation of small bubbles.

It has further proven advantageous to provide a series of gas introducing means 10 arranged in series. For example, there are 1 to 5 consecutive ring-shaped conduits 10 in water flow direction.

The gas supply conduit 6, 7 is further provided with a control unit 9 for controlling the gas flow through the gas supply conduit 6, 7.

In operation a portion of the water flowing in main conduit 1 is sucked into the subisidary conduit 2 by means of pump 5. Liquid carbon dioxide is fed through gas supply conduit 6. The pipe-in-pipe arrangement of gas supply conduit 6 and subsidiary conduit 2 works as a heat exchanger. The water flowing through subsidiary conduit 2 and the carbon dioxide in gas supply conduit 6 exchange heat with each other. The baffles arranged at the outer circumference of gas supply conduit 6 improve the efficiency of the heat exchange. As a result the liquid carbon dioxide will be vaporized to gaseous carbon dioxide. On the other hand, the temperature of the water in subsidiary conduit 2 will be decreased.

The gaseous carbon dioxide is passed to the gas introducing means 10 and introduced into the water. The baffles 8 downstream of the gas introducing means 10 do not only improve the heat exchange between the water and the carbon dioxide. By means of the baffles 8 a turbulence in the water stream in subsidiary conduit 6 is produced which enhances the dissolution of the carbon dioxide in the water. The water enriched in carbon dioxide is then fed back into the main water stream flowing in main conduit 1.

Referring to figure 2 of the drawings, there is shows another embodiment of the invention.

The apparatus according to figure 2 differs from the apparatus of figure 1 essentially in that the pipe-in-pipe arrangement of gas supply conduit 6 and subsidiary conduit 2 is provided upstream the gas introducing means 10 instead of downstream.

The water fed from the main conduit 1 into subsidiary conduit 2 is passed through the heat exchanger formed by the gas supply conduit 6 and the subsidiary conduit 2. By heat exchange of the water with the liquid carbon dioxide the carbon dioxide is vaporized whereas the water is cooled down to some degree. The efficiency of the heat exchange may be increased by providing baffles on the outer surface of gas supply conduit 6 as shown in figure 1.

The vaporized carbon dioxide is fed to the gas introducing means 10 and introduced into the water. Since the water has been cooled down in heat exchange with the carbon dioxide the solubility of carbon dioxide is increased and the efficiency of the carbon dioxide dissolution is enhanced. The dissolution efficiency can eb further improved by providing baffles 11 downstream the gas introducing means 10 in order to cause a water turbulence.

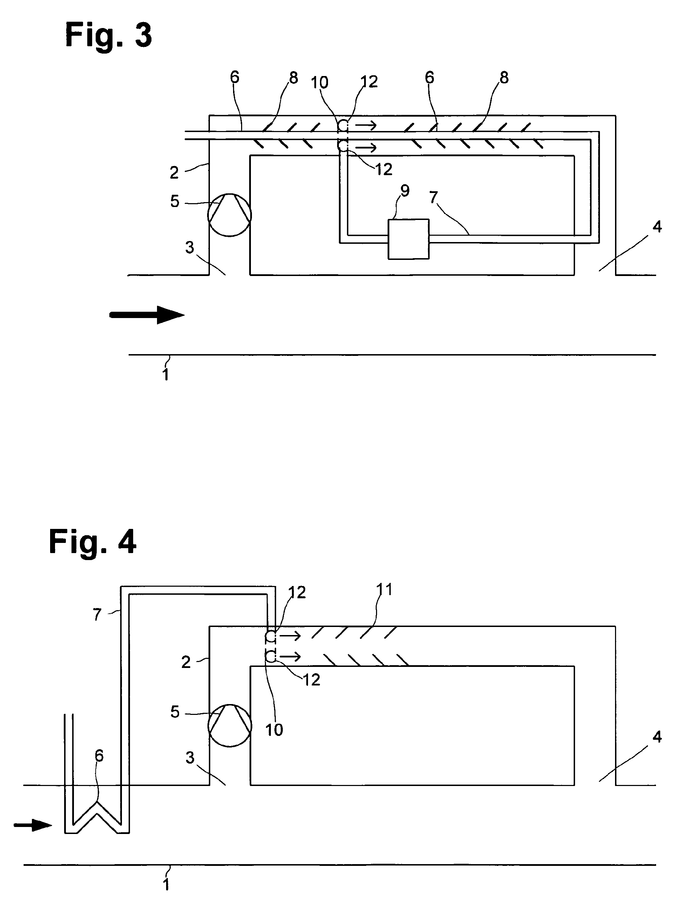

Figure 3 shows a combination of the embodiments according to figures 1 and 2. The heat exchange between carbon dioxide and water gas introducing means 10 is carried out upstream as well as downstream of the gas introducing means 10. Gas supply conduit 6 is arranged inside a portion of the subsidiary conduit 2 as shown in figures 1 and 2. However, the gas introducing means 10 are provided at a position such that the gas supply conduit 6 and the subsidiary conduit 2 form a pipe-in-pipe arrangement upstream of the gas introducing means 10 as well as downstream of the gas introducing means 10. Thereby, the advantages of the embodiment according to figure 1 and the advantages of the embodiment according to figure 2 are achieved.

Figure 4 shows an embodiment where the liquid carbon dioxide is vaporized by heat exchange with the main water stream flowing in the main conduit 1. The portion of the gas supply conduit 6 which forms part of the heat exchanger for vaporizing the carbon dioxide can be placed upstream the branch off 3 of the subsidiary stream 2 (as shown in figure 4), between the branch off point 3 and the re-combination point 4, or downstream the re-combination point 4.

## Claims

1. Method for dissolving a gas in a fluid stream wherein
- said gas is supplied as a liquid gas,
- said liquid gas is vaporized and
- said vaporized gas is introduced and dissolved in said fluid stream, **characterized in that** said liquid gas is vaporized by heat exchange with said fluid stream.

2. Method according to claim 1 wherein said vaporized gas is introduced into said fluid stream by means of gas introducing means (10) and wherein said liquid gas is vaporized by heat exchange with said fluid stream downstream said gas introducing means (10).

3. Method according to claim 1 or 2 wherein said vaporized gas is introduced into said fluid stream by means of gas introducing means (10) and wherein said liquid gas is vaporized by heat exchange with said fluid stream upstream said gas introducing means (10).

4. Method according to any of claims 1 to 3 wherein carbon dioxide is introduced into said fluid stream.

5. Method according to any of claims 1 to 4 wherein said gas is introduced into a water stream.

6. Method according to any of claims 1 to 5 wherein a side stream is branched off said fluid stream, said vaporized gas is introduced into said side stream and said side stream is then re-introduced into said fluid stream.

7. Method according to any of claims 1 to 6 wherein a side stream is branched off said fluid stream, said liquid gas is vaporized by heat exchange with said side stream and said side stream is then re-introduced into said fluid stream.

8. Apparatus for dissolving a gas in a fluid stream comprising a main conduit (1) and a subsidiary conduit (2) having an inlet (3) and an outlet (4) wherein said inlet (3) and said outlet (4) are in communication with said main conduit (1), further comprising gas introducing means (10) for introducing gas into said subsidiary conduit (2), a liquid gas supply (6) and a gas supply conduit (7) connecting said liquid gas supply (6) with said gas introducing means (10), **characterized in that** the gas supply conduit (7) and the subsidiary conduit (2) are in fluid communication with a heat exchanger.

9. Apparatus according to claim 8, **characterized in that** a portion of said gas supply conduit (7) and a portion of said subsidiary conduit (2) form said heat exchanger.

10. Apparatus according to claim 9, **characterized in that** said portion of said gas supply conduit (7) and said portion of said subsidiary conduit (2) are arranged pipe-in-pipe.

11. Apparatus according to any of claims 8 to 10, **characterized in that** said heat exchanger is provided upstream of said gas introducing means (10).

12. Apparatus according to any of claims 8 to 11, **characterized in that** said heat exchanger is provided downstream of said gas introducing means (10).

13. Apparatus according to any of claims 8 to 12, comprising a static mixer (8, 11) located downstream said gas introducing means (10).

14. Apparatus according to any of claims 8 to 13, **characterized in that** there are more than one, preferably between two and five, gas introducing means (10) are provided.

15. Apparatus according to claim 14, **characterized in that** the gas introducing means (10) are consecutively arranged in the flow direction of the fluid stream in the subsidiary conduit (2).
